# EUROPEAN PATENT APPLICATION

(11) **EP 1 918 217 A1**
(43) Date of publication of application: **07.05.2008**
(21) Application number: 06782035.7
(22) Date of filing: 31.07.2006
(51) Int. Cl.: B65D 47/36, B65D 65/42

(54) **OXYGEN BARRIER CAP WITH PULL RING**

(30) Priority: 01.08.2005 JP 2005223377
(71) Applicant: Toyo Seikan Kaisha, Ltd., Tokyo 100-8522 (JP)
(72) Inventor: IMODA, Daisuke, c/o TOYO SEIKAN KAISHA, LTD., Yokohama-shi, Kanagawa 230-0001 (JP); YUKAWA, Yasuhiro, c/o TOYO SEIKAN KAISHA, LTD., Yokohama-shi, Kanagawa 230-0001 (JP)
(74) Representative: Albutt, Anthony John
(86) International application number: PCT/JP2006/315157
(87) International publication number: WO 2007/015464

(57) **Abstract**

The present invention is to provide an oxygen barrier cap with pull ring that maintains the opening easiness by tearing off with a pull ring, and the high productivity of one-piece molding by injection molding, and enhances significantly the gas barrier property, particularly oxygen barrier property. Further, in order to prevent conventional contamination of stored content caused by metal dust generated by tearing off the metal foil, or use of gas barrier resin molding material, the oxygen barrier cap with pull ring is molded from thermoplastic resin, and fixed to an opening of a container, and an oxygen barrier agent is coated on a score surface of a cap with pull ring, to form a coating film with oxygen barrier property.

## Description

### Technical Field

The present invention relates to a cap with pull ring for a plastic container, specifically to an oxygen barrier cap with pull ring in which oxygen barrier property of a score surface of the pull ring has improved, and a method for manufacturing the same.

### Background Art

A cap with pull ring of a plastic container or metal container, which is opened by pulling up and tearing off the ring of a lid member with fingertips, has been used conveniently for a long time for containers of foods or drinks, or pharmaceuticals, from the view points of sealability during transportation, or easy opening upon consumption (one-touch opening), or a guarantee of being unopened when purchased. In plastic containers, it is manufactured easily as a cap with one piece-pull ring, mainly by injection molding.
Further, storage containers made by plastic for foods or drinks, or pharmaceuticals, have been conventionally molded with such as a gas-shielded material (gas barrier property), in order to prevent degradation by oxidation of the stored content caused by oxygen gas penetrated from outside; alteration caused by microorganism growth; or dissipation of volatile components of the stored content to the outside.

However, as the cross-section (surface area) of the lid member of the opening of a plastic container is smaller compared to that of the container body, usually a gas-shielding property has not been conferred, so far.
However, recently, as people became sanitary oriented, storage control of the stored foods or drinks is strictly required, and as their taste became diverse, consumers strongly request that the taste or flavor of the stored foods or drinks is maintained. Further, prevention of dissipation of important volatile components of the stored pharmaceuticals to outside is also strictly required from a quality control viewpoint. Therefore, gas barrier property of a lid member in a plastic container has become inevitable.

Therefore, recently, gas barrier property is strongly required for a cap with pull ring of a plastic container. However, as it is necessary that a cap with pull ring can be opened easily by tear opening even with a small finger force, the thickness of a score part (cyclic brittle (breaking) line by cut out) is thin. Further, a material with low gas barrier property must be used to obtain a good molding property, a particular ingenuity is necessary to improve gas barrier property of a cap with pull ring.
Therefore, many attempts are made recently to confer gas barrier property to a cap with pull ring of a plastic container, and the following improvements are disclosed: a complex lid member having an inside cap to avoid dust from the score when opening the container, which consists of a pull ring without score, and a layer member of a sheet with gas barrier property such as metal foil, and which is torn off from the container together with the inside cap upon consumption (patent document 1) ; a cap with a high gas barrier property, wherein a metal foil or a layer film with barrier property which outer diameter is larger than that of the cyclic brittle line of a score, is combined integrally on the lower surface of the score of a cap with pull ring by insert molding, etc. (patent documents 2 and 3); a lip for pouring (spout) with pull ring molded with a particular resin with gas barrier property consisting of an ethylene-vinyl alcohol copolymer, compatibilizing agent and polyolefin (patent document 4).

In these improved methods, the gas barrier property of a cap with pull ring has been much increased. However, in a method using an inside cap without score, a quite strong force is necessary to tear off the pull ring without score together with the inside cap, and it does not conform with the purpose of a cap with pull ring, which is to open by tear opening the cap easily even with a small finger force. Additionally, the productivity is low, because the lid itself and the inside cap are separately molded pieces, i.e. a two-piece molding. Further, a cap with pull ring in which a metal foil is combined integrally on the lower surface of the score, it cannot be opened easily by tearing it off with a small finger force because of the existence of a metal foil or a layer member. The use of a layer member lowers the productivity, and the action of tearing may generate dust of metal particles and contaminate the stored content, possibly leading to corrosion of metal foil. Further, when a metal foil is used together, resource recycling would not be easy. In a spout in which a cap with pull ring is molded integrally with a resin with gas barrier property, the cost would be too high, as resin with gas barrier property would be used even where gas barrier agent is not necessary other than the score surface. Further, as it is a resin with gas barrier property, moldability or strength of the hinge part or ring part may not be sufficient.
As such, in a conventional cap with pull ring, the opening easiness by pull ring is impaired even by increasing gas barrier property by various methods, and sometimes the productivity of one-piece molding by injection molding can not be achieved. There are many problems left including the following: moldability or cost advantage decreases, contamination of stored content caused by metal particles arises, and strength of hinge part or pull ring part is not sufficient.

Patent document 1: Japanese Laid-Open Japanese Application No. 6-255663 (Abstract; claims 2-3 in the scope of claims; paragraphs 0004 and 0009)
Patent document 2: Japanese Laid-Open Japanese Application No. 7-187212 (Abstract)
Patent document 3: Japanese Laid-Open Japanese Application No. 2002-362608 (Abstract)
Patent document 4: Japanese Laid-Open Japanese Application No. 2000-248128 (Abstract; paragraph 0005)

### Disclosure of the Invention

### Object to be solved by the present invention

Regarding the problem of improving gas barrier property in a cap with pull ring in the prior art, which has been described in paragraphs 0003-0005, the gas barrier property is recently strongly required in a cap with pull ring of a plastic container. However, in a cap with pull ring, the requirement that it can be easily opened by tear opening even with a small finger force is essential. Further, the thickness of the score part is thin, and in order to obtain good moldability, materials with low gas barrier property must be used. Regarding the above points, the object to be solved by the present invention is to maintain opening easiness by tearing off a pull ring, and a high productivity of a one-piece molding by injection molding; and to significantly increase the gas barrier property, particularly the oxygen barrier property of a cap with pull ring, as well as to prevent lowering of moldability or cost advantages, and contamination of stored content caused by metal particles, generated by tearing the metal foil off.

### Means to solve the Object

In order to solve the object of the invention related to gas barrier property of a cap with pull ring, particularly oxygen barrier property, the present inventors made multilateral considerations and various attempts with a cap with pull ring, regarding the structure of the pull ring, form of the score part, molding method, or moldability of resin material, or use of sheet material with oxygen barrier property, oxygen barrier agent material, or condition in use of oxygen barrier agent or treatment means thereof. During the process, the present inventors focused their attention on that oxygen permeation is most associated with the oxygen barrier property of the surface to which a score is formed (score surface). Thus, they found out that in order to solve the above object, it is effective to coat and dry a solution of an oxygen barrier agent on the score surface of a cap with pull ring, manufactured in one-piece with a conventional injection molding. Further, they considered the types of oxygen barrier agents, or coating methods, and completed the present invention in which the oxygen barrier property of the score surface is sufficiently improved, while maintaining the requirements that it can be opened easily by tearing off even with a small finger force.

The present invention has as a fundamental constitution or feature, a novel requirement to coat an oxygen barrier agent on the surface having a score in a cap with pull ring, and particularly has an additional feature to coat it by a spray method on the score part.
The thickness of the coating film is very thin, about less than 70 µm, unlike the conventional barrier sheet. Therefore, a sufficient oxygen barrier property can be realized without impairing the conventional opening easiness of the score surface, without using conventional metal foil or barrier resin molding material. Further, it can retain the easiness of molding of the conventional one-piece injection molding, and economic advantages by high productivity.

Further, the present invention preferably uses as an oxygen barrier agent, an aqueous solution comprising a denatured ethylene-vinyl alcohol copolymer and inorganic plate-like filler, to effectively exhibit the oxygen barrier function. Further, an anchor treatment is conducted on the score surface in order to enhance the integral joining of a score surface and a coating film with oxygen barrier property before coating the oxygen barrier agent.
When diisocyanate treating agents are coated beforehand on the score surface as an anchor agent, additionally to the anchor effect of enhancing joining property, the oxygen barrier property is further increased, which is an additional effect that was not expected, providing an additional specificity of the present invention.

Further, the present invention also encompasses a method for manufacturing an oxygen barrier cap with pull ring, which main requirement is to coat and dry an oxygen barrier agent to form a coating film, and an oxygen barrier container with an oxygen barrier cap of the present invention in which foods or drinks, or pharmaceuticals are stored.

In view of the patent documents in the prior art mentioned in paragraphs 0004-0005, and the review of other patent documents that focus on enhancement of gas barrier property of a cap with pull ring, there is no description concerning the unique and novel constitution and effect of the present invention, described in paragraphs 0009-0010. Therefore, it can be said that the present invention has created a remarkably improved technology of an oxygen barrier cap with pull ring.

In the above, the present invention has been outlined according to the development of the present invention, and the fundamental constitutions and features of the present invention as a means to solve the object of the present invention. Overlooking the present invention in its entirety, the present invention is constituted from the following units of invention where the invention [1] being the basic invention, and the following inventions being specific examples or embodiments. In the meantime, units of the invention as a whole are called "the present invention".

[1] An oxygen barrier cap with pull ring molded from thermoplastic resin and fixed to an opening of a container, wherein an oxygen barrier agent is coated on the upper surface and/or lower surface of a score surface of the cap with pull ring to form a coating film with oxygen barrier property.
[2] The oxygen barrier cap with pull ring according to [1], wherein the oxygen barrier agent is coated on the upper surface of a score surface of the cap with pull ring to form a coating film with oxygen barrier property.
[3] The oxygen barrier cap with pull ring according to [1] or [2], wherein the oxygen barrier agent is coated by spray coating.
[4] The oxygen barrier cap with pull ring according to any one of [1] to [3], wherein the film thickness of the coating film with oxygen barrier property is 0.07 to 70 µm.
[5] The oxygen barrier cap with pull ring according to any one of [1] to [4], wherein the oxygen barrier agent is an aqueous solution comprising a denatured ethylene-vinyl alcohol copolymer and inorganic plate-like filler.
[6] The oxygen barrier cap with pull ring according to any one of [1] to [5], wherein an anchor treatment is conducted to a score surface of the cap with pull ring before coating the oxygen barrier agent.
[7] The oxygen barrier cap with pull ring according to [6], wherein the anchor treatment is selected from the group consisting of corona discharge treatment, ozone treatment, plasma treatment and itro treatment, or the anchor agent is coated after the treatment.
[8] The oxygen barrier cap with pull ring according to [7], wherein the anchor agent is a diisocyanate treating agent.
[9] The oxygen barrier cap with pull ring according to any one of [1] to [8], wherein the oxygen barrier agent is coated along a cyclic brittle line, and the coating film with oxygen barrier property is formed only along the cyclic brittle line.
[10] The oxygen barrier cap with pull ring according to any one of [1] to [9], wherein the cap with pull ring to which a score is formed is molded from polyethylene resin.
[11] The oxygen barrier cap with pull ring according to any one of [1] to [10], wherein the oxygen barrier cap with pull ring is a one-piece cap molded integrally with a lid part openable and closable via a hinge.
[12] The oxygen barrier cap with pull ring according to any one of [1] to [10], wherein the oxygen barrier cap with pull ring is an inside cap, further provided with a lid part which seals a pour part of the inside cap.
[13] A method for manufacturing an oxygen barrier cap with pull ring fixed to the opening of the container according to any one of [1] to [12], comprising the steps of either conducting or not conducting an anchor treatment, coating and drying an oxygen barrier agent, and forming a coating film with oxygen barrier property, on a score surface of a cap with pull ring, to which a score is formed.
[14] The method for manufacturing an oxygen barrier cap with pull ring fixed to the opening of the container according to [13], wherein the cap with pull ring to which a score is formed is manufactured by injection molding with a thermoplastic resin as a one-piece cap.
[15] An oxygen barrier container in which a food or drink, or a pharmaceutical is stored, and wherein the opening of the container is sealed with an oxygen barrier cap with pull ring according to [11] or [12].

### Effect of the invention

The oxygen barrier cap with pull ring of the present invention can provide a sufficient oxygen barrier property, without impairing the conventional opening easiness of the score surface which can be opened easily by tear opening even with a small finger force, and without using conventional aluminum foil or barrier resin molding material. Further, the economic advantages due to easiness of molding of one-piece injection molding, or high productivity can be maintained.

### Brief Description of Drawings

Fig. 1 is a cross-sectional view of the structure, showing an example of an oxygen barrier cap with pull ring as an inside cap.
Fig. 2 is a cross-sectional view of the structure, showing an one-piece cap in which an oxygen barrier cap with pull ring has been molded integrally with a hinge cap, as one embodiment of the present invention.

### Best Mode of Carrying Out the Invention

The present invention has been described in the above, in order to solve the objects of the present invention according to the fundamental constitution of the present invention. In the following, the embodiments to practice the units of inventions shown in paragraph 0014 will be explained in detail by referring to the Figures.

### 1. Oxygen barrier cap with pull ring

### (1) Fundamental constitution

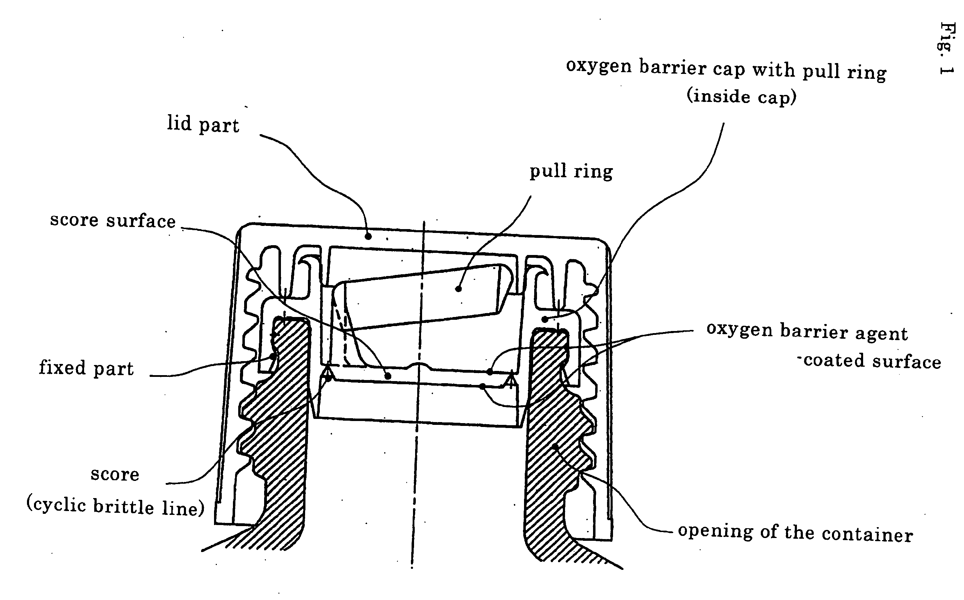

The fundamental constitution of an oxygen barrier cap with pull ring as an inside cap of the present invention is shown in Fig. 1 by a cross-sectional view of the structure.
The two surfaces indicated as oxygen barrier agent-coated surface in Fig. 1, are the upper and lower surfaces of the score surface, and a score is formed on the lower surface of the score surface. The solution of oxygen barrier agent is coated on the upper surface or lower surface of a score surface, or on both surfaces. A pull ring is shown on the upper part of the score surface. On the side surface of a spout part (outer tube) of the cap, a fixed part having engaging grooves on the inner surface is provided. The oxygen barrier cap is fixed by the engaging grooves to the opening (nozzle) of a container.

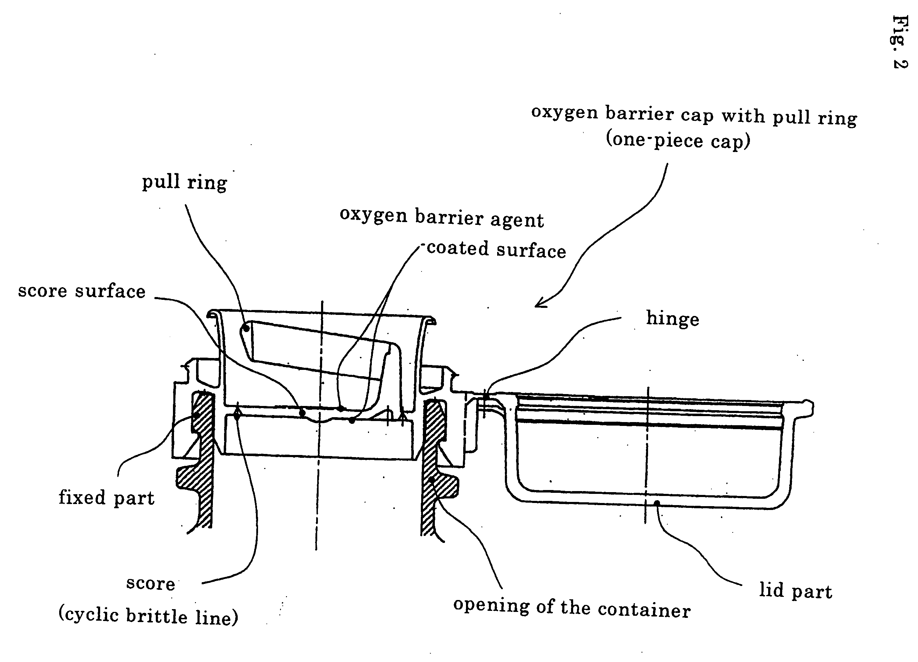

In Fig. 2, as one embodiment of the present invention, an one-piece cap wherein the oxygen barrier cap with pull ring is molded integrally with a hinge cap, is shown.

### (2) Score

The score is a cyclic brittle line formed for opening by tearing, formed by providing a cyclic incision on the score surface of a cap with pull ring. The incision is cut preferably in a V-cross section shape, and formed according to the shape of the surface of the mold, at the same time as when a cap with pull ring in the mold of an injection molding device is molded integrally.
The incision is usually formed on the lower surface of the score surface on the opposite side of the side to which tearing force is applied, so that it can be easily torn off, while it can be formed on the upper surface of the score surface.

It is preferred that the score thickness is thinner as the tear opening of a pull ring becomes easier. However, if it is too thin, the barrier property of the oxygen gas (and water) becomes too low, and the molding productivity decreases. Therefore, the thinness limit is about 200 µm, and if it is a thickness of up to about 300 µm, the opening strength would be about 3 kgf in polyethylene resin, and it could be opened by a woman or an elder person even with a small finger force.
The smaller the outer diameter of a score part is, the lower the oxygen permeability will be. If it is too small, the opening hole will be too small and the discharge of the stored content, for example food material such as dressing for food, would become difficult upon consuming. Further, it would be difficult to pick up the pull ring with fingertips, thus the diameter limit would be about 10 mm. At that time the outer diameter of the whole cap would be about 20 mm.

### (3) Coating of oxygen barrier agent

The oxygen barrier agent prevents not only invasion of oxygen gas from outside, but also dissipation of moisture from foods stored in the container, or of important volatile components from pharmaceuticals, as a gas barrier agent.
An oxygen barrier agent is coated onto the score surface in a form of a solution of oxygen barrier agent, and is coated on the upper surface and/or lower surface of the score surface. From hygienic point of view for foods of stored content, and from purity maintenance of pharmaceuticals, it is preferred that the oxygen barrier agent is coated on the upper surface in order to avoid contact with stored content.
It is most preferred to coat the oxygen barrier agent on the whole surface of the score surface not protected by the container body. However, since the oxygen permeability is increased due to the thinness of the score surface, the coating of the score part, i.e. the part along the cyclic brittle line can be thicken to increase the oxygen barrier property. Alternatively, the oxygen barrier agent can be coated only to that part to reduce the amount of oxygen barrier agent used.
When the oxygen barrier agent is coated to the surface on which a score is formed, liquid will remain in a groove of the score, and thus an action and effect can be expected to thicken the coating of the thinnest part.
Therefore, a score can be formed on the upper surface of the cap with oxygen barrier property (upper surface of the score surface) to avoid direct contact of oxygen barrier agent and stored content, as well as to retain liquid of oxygen barrier agent in the groove of the score.

As for a coating method, spray coating (misting coating by spray nozzle) is most preferred as being easy and the productivity during coating process being high. However, other coating methods such as roll painting can be used.
The thickness of the coating film of the oxygen barrier agent is preferably 0.07 to 70 µm in view of oxygen barrier property and opening easiness. Even it depends on the content of the oxygen barrier agent, generally, when the thickness is lower than 0.07 µm, the barrier property is not sufficient, and when it exceeds 70 µm, the opening easiness decreases. This value is determined according to the comparison of Examples and Comparison Examples, described in the following.
In the oxygen barrier cap with pull ring of the present invention, it is possible to increase the oxygen barrier property up to 4.2 × 10⁻³ to 2.1 × 10⁻⁴ (cc/cap/day) (see Examples in the following), providing sufficient oxygen barrier property for using the container.

### (4) Oxygen barrier agent

As an oxygen barrier agent (gas barrier agent), an aqueous solution comprising resin components such as ethylene-vinyl alcohol copolymer, and inorganic plate-like filler is preferably used. The aqueous solution has a high oxygen barrier property, and is already known as a superior oxygen barrier coating agent for food containers (see Japanese Laid-Open Patent Application no. 2003-276124; Abstract and Examples of paragraphs 0021-0023).
Denatured EVOH only dissolves in alcohol, and inorganic filler does not cleave when the alcohol content is large (up to 50 wt%). Therefore, an aqueous solution comprising equal to or less than 50% alcohol is preferably used.
Further, an organic solvent solution of an oxygen shielding resin such as polyamide resin can be used. As oxygen barrier agent, an aqueous solution of alcohols is used when inorganic filler is used. However, other organic solvents such as acetic ethyl are used depending on barrier agents.

In the ethylene-vinyl alcohol copolymer in the above aqueous solution, vinyl alcohol ratio is 40 - 80 mol%, and by copolymerizing with ethylene, the barrier property under high humidity increases. In order to increase solubility to an aqueous alcohol solvent, it can be denatured with a small amount of copolymerized monomer.

An inorganic layer compound as inorganic plate-like filler, is an inorganic compound having a layer structure in which unit crystal layers are piled. It is preferred that the particle diameter is 5 µm or less, and the aspect ratio of about 50 - 5000 in a cleaved state.
When the aspect ratio is less than 50, the gas barrier property is insufficient. It is hard to produce one with an aspect ratio of 5000 or more, which is also expensive in cost. When the particle diameter is 5 µm or less, the transparency is good, and it is preferred that the particle diameter is 1 µm or less for use where transparency is important.

Specific examples of inorganic layer compounds include graphite, chalocogen compound, and clay mineral. As clay mineral, from the view point of swelling and cleavage, smectite, vermiculite, and mica are preferred, and smectite is more preferred. As smectites, Montmorillonite, Beidellite, Nontronite, Saponite, Suconite, Stevensite, Hectorite are used.

It is preferred to swell and cleave inorganic layer compounds into dispersion medium. As dispersion medium to swell and cleave inorganic layer compounds, water, and alcohols such as methanol, ethanol, propanol, isopropanol, ethylene glycol, diethylen glycol are mainly used. Dimethylformamide, dimethylsulfoxide, acetone can be used, while water, or alcohols such as propanol are preferred.

As oxygen barrier agent, it is preferred that it is obtained by a dispersion treatment under high pressure of a mixed solution of a dispersion solution comprising inorganic plate-like filler (inorganic layer compound) and an aqueous solution of ethylene-vinyl alcohol copolymer. The pressure conditions of the dispersion treatment under high pressure are preferred to be 100 kgf/cm² or more. Then, the amount of dispersion medium or solvent is reduced accordingly.
The mass ratio of an inorganic layer compound and resin component is preferred to be within 70/30 to 50/50. While it depends on other conditions, when the ratio of inorganic layer compound exceeds 70% by weight, the formed barrier layer becomes fragile, and when it is less than 50% by weight, the barrier property is insufficient. The concentration of inorganic layer compound and resin component, is preferred to be within 0.1 to 70 % by weight in total.
Oxygen barrier agent is an aqueous solution of alcohols, which coating film can be made as thin as equal to less than 1 µm. However, as the drying property is relatively low, it is dried forcibly after coating, preferably by means of hot air spray.

When the oxygen barrier agent is coated on a score surface, inorganic layer compounds align in multiple layers in a cleaved state, shifting in parallel to the score surface, in a resin layer of the coating film, and it forms a dispersion state just like a labyrinth. When the oxygen gas penetrates the resin layer in the barrier layer, the pass way becomes very long, and as a result, the oxygen permeability is lowered and the oxygen barrier property enhances.
Oxygen barrier property varies upon ethylene content or cross linking level of denatured ethylene-vinyl alcohol copolymer; content and aspect ratio of inorganic plate-like filler; or adherence with the score surface of oxygen barrier agent, besides the coating thickness of oxygen barrier agent.

### (5) Anchor treatment

Anchor treatment is a treatment to enhance the joining of a score surface and a coating film with oxygen barrier property. It can be performed by conducting any one of the following physical treatments to the score surface: corona discharge treatment, ozone treatment, plasma treatment or itro treatment. Alternatively, a chemical treatment comprising a further coating (application) of anchor agent can be performed after the physical treatment.
The oxygen barrier cap with pull ring of the present invention is mainlymolded with polyethylene resin, as described later in paragraph 0033. As the joining property of polyethylene resin is quite low to other resin material, preferably, the anchor treatment is necessary.

The material of anchor agents is not particularly limited, while it is preferred that it contains an diisocyanate compound and active hydrogen compound.
Examples of diisocyanate compounds include aliphatic or alicyclic isocyanate compounds such as hexamethylene diisocyanate (HDI) or isophorone diisocyanate (IPDI).
Active hydrogen compounds are not limited as long it has a functional group binding to isocyanate compounds. Examples include ethylene glycol, diethylene glycol, dipropylene glycol, 1,4-butanediol, 1,6-hexanediol, neopentyl glycol, and trimethylolpropane.
Anchor agents are used as a solution of anchor agents. Solvent components are mainly organic solvents, including alcohols, aliphatic hydrocarbons, alicyclic hydrocarbons, aromatic hydrocarbons, esters, ketons, ethers, and halogen hydrocarbons.

As for the thickness when an anchor agent is coated in a film state on the score surface, it is preferred to be coated so that the dried thickness is about 0.01 to 5 µm. When the coating thickness is large, the anchor strength will increase while the easiness of tear opening will be affected.
In the present invention, as it is described in paragraph 0010, when diisocyanate treating agents are coated beforehand on the score surface as an anchor agent, additionally to the anchor effect of enhancing joining property, the oxygen barrier property is further increased, which is an additional effect that was not expected.

### (6) Resin material

As resin materials which form integrally an oxygen barrier cap with pull ring, thermoplastic resin is used.
Polyethylene resin has a suitable flexibility and stretch property for a pull ring, and is preferably used from the view points such as injection moldability, economic aspect, resource recycling, and not contaminating the environment.

### 2. Embodiment of use of an oxygen barrier cap with pull ring

### (1) Lid member of a container

An oxygen barrier cap with pull ring is used as an inside lid member, as shown in Fig. 1. It can be commercialized as an integral lid member, in which a lid part openable and closable upwards via the inside cap and a hinge is provided to the opening of the container. Further, as it is shown in Fig. 2, it can be used as a one-piece cap molded integrally with the lid part.

### (2) Storage container

It is practically used as a container with oxygen barrier property storing foods or drinks, or pharmaceuticals. It can sufficiently prevent oxidation degradation of the stored content caused by oxygen gas penetrated from outside; alteration caused by microorganism growth; or dissipation of moisture or volatile components of the stored content to the outside. Particularly, taste and flavor of foods or drinks at the time of storage can be maintained for a long time.

### 3. Manufacture of oxygen barrier cap with pull ring

### (1) Manufacture of oxygen barrier cap with pull ring

The oxygen barrier cap with pull ring of the present invention is manufactured by either conducting or not conducting an anchor treatment on a score surface of a cap with pull ring on which a score is formed, by coating and drying an oxygen barrier agent, and forming a coating film with oxygen barrier property.

### (2) Integral molding by injection molding

A cap with pull ring on which a score is formed can be manufactured with a high productivity by injection molding from thermoplastic resin as a one-piece cap.

### Examples

In the following, according to each example and by comparing each comparative example and referring to the Figures, the present invention will be shown specifically as an actual example to demonstrate the reasonability and significance of each requirement of the constitution of the present invention, as well as the superiority over conventional techniques.

### [Actual Example by figures]

An actual example of the oxygen barrier cap with pull ring as an inside cap is shown in Fig. 1, with a cross-sectional view of the structure. An actual example of a one-piece cap wherein the oxygen barrier cap with pull ring is integrally molded with the hinge cap is shown in Fig. 2, with a cross-sectional view of the structure.

### [Example 1]

In an oxygen barrier cap with pull ring which is molded as a one-piece using polyethylene resin by injection molding, an oxygen barrier agent was spray-coated on the upper surface of a score under the following conditions.
Oxygen barrier agents;
(Solid) Total content of denatured ethylene-vinyl alcohol copolymer [ethylene content: 32 mol%; denatured with (hydrogen peroxide)] and inorganic plate-like filler (Montmorillonite): 5% by weight; Filler content in solid: 60%.
(Dispersion medium) 60% by weight of water; 5% by weight of n-propanol; and 30% by weight of i-propanol
Anchor treatment: none
Barrier coating thickness; 0.10 µm
Oxygen permeability (cc/cap/day) and opening strength (kgf) were measured and the results are shown in Table 1.
Measurement method of oxygen permeability: Oxygen transparancy coefficient measurement device (OX-TRAN 2/20; Modern control) was used to measure the oxygen permeation coefficient at 22°C-60% RH.
Measurement method of opening strength: Tensile strength tester (Universal Tensilon Testing Instrument UCT-500; Orientec) was used at 23°C, to measure the load on a pull ring when pulled vertically at a tensile speed of 50 mm/min. The results are shown in Table 1.

### [Examples 2 to 14] and [Comparative examples 1 to 4]

Examples were performed under the same conditions as Example 1, except the conditions indicated in Table 1. The results are shown in Table 1.
In Table 1, the marks ○ and × for oxygen permeability and opening strength, ○ is marked when the oxygen permeability and opening strength are practically suitable, and × is marked when there is a practical problem.
In Examples 2 to 8, the oxygen barrier coating thickness has been changed from Example 1. In Examples 9 to 12, the oxygen barrier coating thickness and content% of inorganic filler in solid were changed from Example 1. In Examples 13 to 14, the oxygen barrier coating thickness was changed from Example 1, and an anchor treatment was further conducted. Anchor treatment is a coating of isocyanate 2 pack-type polyurethane.
Comparative Example 1 is a cap with pull ring, a conventional product made by polyethylene resin, wherein oxygen barrier treatment is not performed. In Comparative Examples 2 and 3, oxygen barrier coating thickness has been changed from Example 1. Comparative Example 4 is a conventional product lined with aluminum foil for oxygen barrier property.

**[Table 1]**

| [High barrier cap; Example] Solid (denatured EVOH + inorganic plate-like filler) content: 5 wt% Ethylene content in denatured EVOH: 32 mol% | | | | | | | |
|---|---|---|---|---|---|---|---|
| | Oxygen permeation (cc/cap/day) | | Opening strength (kgf) | | Barrier film thickness | note | |
| | | | | | | Filler content(in solid) | Anchor agent (AC) |
| Ex. 1 | 4.2 × 10⁻³ | ○ | 3.0 | ○ | 0.10 µm | 60% | No AC |
| Ex. 2 | 2.9 × 10⁻³ | ○ | 3.1 | ○ | 0.20 µm | 60% | No AC |
| Ex. 3 | 1.7 × 10⁻³ | ○ | 3.2 | ○ | 0.50 µm | 60% | No AC |
| Ex. 4 | 1.3 × 10⁻³ | ○ | 3.2 | ○ | 1.0 µm | 60% | No AC |
| Ex. 5 | 5.6 × 10⁻⁴ | ○ | 3.3 | ○ | 5.0 µm | 60% | No AC |
| Ex. 6 | 4.2 × 10⁻⁴ | ○ | 3.3 | ○ | 10.0 µm | 60% | No AC |
| Ex. 7 | 4.2 × 10⁻⁴ | ○ | 3.4 | ○ | 20.0 µm | 60% | No AC |
| Ex. 8 | 2.1 × 10⁻⁴ | ○ | 3.4 | ○ | 50.0 µm | 60% | No AC |
| Ex. 9 | 4.2 × 10⁻³ | ○ | 3.1 | ○ | 0.50 µm | 30% | No AC |
| Ex. 10 | 3.1 × 10⁻³ | ○ | 3.1 | ○ | 0.50 µm | 40% | No AC |
| Ex. 11 | 2.5 × 10⁻³ | ○ | 3.3 | ○ | 0.50 µm | 50% | No AC |
| Ex. 12 | 1.4 × 10⁻³ | ○ | 3.3 | ○ | 0.50 µm | 70% | No AC |
| Ex. 13 | 1.4 × 10⁻³ | ○ | 3.3 | ○ | 0.50 µm | 60% | AC 1 µm |
| Ex. 14 | 1.1 × 10⁻³ | ○ | 3.5 | ○ | 0.50 µm | 60% | AC 2 µm |
| Comparative Ex. 1 | 1.6 × 10⁻² | × | 3.0 | ○ | Existing product | - | - |
| Comparative Ex. 2 | 1.3 × 10⁻² | × | 3.0 | ○ | 0.05 µm | 60% | No AC |
| Comparative Ex. 3 | 1.4 × 10⁻⁴ | ○ | 4.2 | × | 100 µm | 60% | No AC |
| Comparative Ex. 4 | 1.2 × 10⁻⁴ | ○ | 6.3 | × | Lined with AI film | - | - |

### [Reference Example]

An oxygen barrier cap was prepared with the same conditions as Example 1. Oxygen permeability was measured after immersing it in water, alcohol, oil, dressing as stored food content at 40°C for 1 month. Similar oxygen permeation as Example 1 was observed in each cap immersed in any of the content. It has been confirmed that the oxygen barrier agent is not affected by the content.

### [Discussion of Results of Examples and Comparison Examples]

By comparing each of the above examples and comparative examples, it has been revealed that the oxygen barrier cap with pull ring of the present invention can provide a sufficient oxygen barrier property, without impairing the conventional opening easiness of the score surface which can open by tear opening even with a small finger force(about 3kgf), without using conventional aluminum foil or barrier resin molding material.

Specifically, in Examples 1 to 8, the coating thickness of the oxygen barrier agent was changed. When the coating thickness is 0.1 - 50 µm, the oxygen barrier property has been enhanced to 4.2 × 10⁻³ - 2.1 × 10⁻⁴ (cc/cap/day). As the coating thickness increases, the oxygen barrier property is enhanced, suggesting the effectiveness and significance of the oxygen barrier agent. In Comparative Example 2, the coating thickness is too thin (0.05 µm) and the oxygen barrier property is insufficient. Further, as the coating thickness becomes ununiform, it becomes difficult to coat uniformly. In Comparative Example 3, the coating thickness is too thick (100 µm). Thus, even the oxygen barrier property is sufficient, the opening strength is too large, and therefore not practicable. Therefore, it is reasonable to determine the coating thickness from about 0.07 to 70 µm in view of oxygen barrier property and opening easiness. Particularly, in Example 8, it is noted that an oxygen barrier property is observed which is similar to that of conventional product of Comparative Example 4 to which aluminum foil is lined for oxygen barrier of Comparative Example 4.
In Examples 9 to 12, content of inorganic plate-like filler was changed, and it is shown that about 30% is necessary as the content to ensure sufficient oxygen barrier property. Further, as the content increases, the oxygen barrier property increases, suggesting the effectiveness and significance of inorganic plate-like filler against oxygen barrier property.
In Examples 13 to 14, an anchor agent is coated. In Example 13, the oxygen barrier property has slightly increased compared to corresponding Example 3 in which no anchor treatment is conducted. In Example 14, as the coating thickness of the anchor agent is thicker than in Example 13, the oxygen barrier property is higher, and compared to corresponding Example 3 in which no anchor treatment is conducted, it is shown that the oxygen barrier property has greatly improved. Anchor treatment is conducted to improve the joining of the score surface and oxygen barrier agent, while the fact that the oxygen barrier property is additionally improved is an inherent characteristic of the present invention.
Comparative Example 1 is a conventional product made of polyethylene resin, wherein no oxygen barrier treatment is performed. Therefore, oxygen permeability is about 10-fold higher compared to that of the present invention, and lack of oxygen barrier property is obvious. Comparative Example 4 is a conventional product lined with aluminum foil for oxygen barrier property, and it is natural that the oxygen permeability is significantly low. However, the opening strength is also significantly high, and the nature of a cap with pull ring that can be opened easily even with a small finger force is lacking. It has been also clear that there is a problem of contamination of stored foods or pharmaceuticals caused by metal fine powder dust when tearing off.
According to the above discussion on comparison of each example and comparative example, which has been described in detail, the superiority of the present invention over the conventional art is obvious, and the reasonability and significance of each requirement of the constitution of the present invention is clarified.

### Industrial Applicability

The oxygen barrier cap with pull ring of the present invention can provide a sufficient oxygen barrier property, without impairing the conventional opening easiness of the score surface which can be opened by tearing off easily even with a small finger force, without using conventional aluminum foil or barrier resin molding material. Further, the economic advantages due to easiness of molding of one-piece injection molding and high productivity can be maintained. Therefore, it is useful as a cap with pull ring of a plastic storage container for foods or drinks, or pharmaceuticals in the industrial field, and is highly applicable.

## Claims

1. An oxygen barrier cap with pull ring molded from thermoplastic resin and fixed to an opening of a container, wherein an oxygen barrier agent is coated on the upper surface and/or lower surface of a score surface of the cap with pull ring to form a coating film with oxygen barrier property.

2. The oxygen barrier cap with pull ring according to claim 1, wherein the oxygen barrier agent is coated on the upper surface of a score surface of the cap with pull ring to form a coating film with oxygen barrier property.

3. The oxygen barrier cap with pull ring according to claim 1 or 2, wherein the oxygen barrier agent is coated by spray coating.

4. The oxygen barrier cap with pull ring according to any one of claims 1 to 3, wherein the film thickness of the coating film with oxygen barrier property is 0.07 to 70 µm.

5. The oxygen barrier cap with pull ring according to any one of claims 1 to 4, wherein the oxygen barrier agent is an aqueous solution comprising a denatured ethylene-vinyl alcohol copolymer and inorganic plate-like filler.

6. The oxygen barrier cap with pull ring according to any one of claims 1 to 5, wherein an anchor treatment is conducted to a score surface of the cap with pull ring before coating the oxygen barrier agent.

7. The oxygen barrier cap with pull ring according to claim 6, wherein the anchor treatment is selected from the group consisting of corona discharge treatment, ozone treatment, plasma treatment and itro treatment, or the anchor agent is coated after the treatment.

8. The oxygen barrier cap with pull ring according to claim 7, wherein the anchor agent is a diisocyanate treating agent.

9. The oxygen barrier cap with pull ring according to any one of claims 1 to 8, wherein the oxygen barrier agent is coated along a cyclic brittle line, and the coating film with oxygen barrier property is formed only along the cyclic brittle line.

10. The oxygen barrier cap with pull ring according to any one of claims 1 to 9, wherein the cap with pull ring to which a score is formed is molded from polyethylene resin.

11. The oxygen barrier cap with pull ring according to any one of claims 1 to 10, wherein the oxygen barrier cap with pull ring is a one-piece cap molded integrally with a lid part openable and closable via a hinge.

12. The oxygen barrier cap with pull ring according to any one of claims 1 to 10, wherein the oxygen barrier cap with pull ring is an inside cap, further provided with a lid part which seals a pour part of the inside cap.

13. A method for manufacturing an oxygen barrier cap with pull ring fixed to the opening of the container according to any one of claims 1 to 12, comprising the steps of either conducting or not conducting an anchor treatment, coating and drying an oxygen barrier agent, and forming a coating film with oxygen barrier property, on a score surface of a cap with pull ring, to which a score is formed.

14. The method for manufacturing an oxygen barrier cap with pull ring fixed to the opening of the container according to claim 13, wherein the cap with pull ring to which a score is formed is manufactured by injection molding with a thermoplastic resin as a one-piece cap.

15. An oxygen barrier container in which a food or drink, or a pharmaceutical is stored, and wherein the opening of the container is sealed with an oxygen barrier cap with pull ring according to claim 11 or 12.
